# NEUE EUROPÄISCHE PATENTSCHRIFT

(11) **EP 0 790 273 B2**
(45) Veröffentlichungstag und Bekanntmachung des Hinweises auf die Entscheidung über den Einspruch: **22.10.2008**
(45) Hinweis auf die Patenterteilung: 07.07.2004
(21) Anmeldenummer: 97100873.5
(22) Anmeldetag: 21.01.1997
(51) Int. Cl.: C08J 9/00, C08L 23/02

(54) **Polyolefin-Weichschaumstoff mit Wärmedämmungseigenschaften und Verfahren zu seiner Herstellung**
Soft polyolefin foam with insulation properties and preparation process thereof
Mousse souple de polyuréthane, ayant des propriétés isolantes et son procédé de préparation

(30) Priorität: 13.02.1996 DE 19605266
(43) Veröffentlichungstag der Anmeldung: 20.08.1997
(73) Patentinhaber: Alveo AG, 6002 Luzern (CH)
(72) Erfinder: Bruijnen, Peter, 6077 GE St. Odilienburg (NL); Scholbe, Ulrich, 6005 Luzern (CH)
(74) Vertreter: Strehl Schübel-Hopf & Partner

(56) Entgegenhaltungen:
- DE-A- 1 947 589
- DE-A- 2 024 868
- DE-A- 4 406 613
- FR-A- 1 021 833
- US-A- 5 010 112

## Beschreibung

Die Erfindung bezieht sich auf einen elastischen Polyolefin-Weichschaumstoff mit geschlossenen Zellen, der ausgezeichnete Wärmedämmungseigenschaften aufweist. Die verbesserte Wärmedämmungseigenschaft macht den erfindungsgemäßen Schaumstoff geeignet als Wärmeisolationsmaterial im Bauwesen und Apparatewesen, für Rohrdämmungen, Dämmbahnen, Dämmplatten und wärmedämmende Formkörper.

Aus dem deutschen Patent DE 3319446 ist bekannt, daß durch Zusatz von reflektierenden Pulvern die Wärmedämmung von Hartschaum (beispielsweise Polystyrol) bis zu 30% verbessert werden kann. Es werden dort jedoch keine Angaben über die effektiv erzielten Wärmedämmwerte gemacht. Als Anwendung wird hauptsächlich die Hinterlegung von Heizungsradiatoren zur Rückgewinnung der Wärmestrahlung genannt. Die genannte Patentschrift offenbart kein Verfahren zur Herstellung eines solchen Hartschaumstoffes.
Platten und Bahnen aus Hartschaumstoff haben den Nachteil, daß sie sehr empfindlich gegen Bruch und thermische Verformung sind, sie eignen sich daher nicht, wie weichelastische Polyolefinschaumstoffe, für schwierige Einbausituationen oder zur Herstellung von Rohrdämmungen durch thermische Verformung.

Die DE-A-4406613 gibt außerdem an, daß ein zur Wärmeisolierung dienender Polymerschaumstoff dadurch erhalten werden kann, daß die den Schaumstoff bildenden Komponenten vor dem Schäumvorgang Infrarot-reflektierende Pigmente in einer Menge von 0,6 bis 10 Gew.-% zugesetzt werden. Als Beispiel für das reflektierende Pigment wird dort Mikroglimmer, Antimonsulfid, Chromoxid etc. genannt.

Mit Hilfe dieses bekannten Verfahrens werden aber immer noch unzureichende Wärmedämmwerte erzielt, die im Bereich von 0,041 bis höchstens 0,0365 W/mK liegen.

Es ist daher Aufgabe der vorliegenden Erfindung, einen weich-elastischen Polyolefin-Schaumstoff zur Verfügung zu stellen, der einen ausgezeichneten Wärmedämmwert λ von 0,035 W/mK bei 40°C oder weniger besitzt. Dieser Schaumstoff soll sich darüber hinaus in einfacher Weise nicht nur zu Platten, Bahnen und Rohrisolierungen, sondern auch durch thermische Verformung zu beliebigen Formkörpern verarbeiten lassen ohne daß Brüche auftreten oder der Schaumstoff kollabiert.

Gegenstand der Erfindung ist ein Polyolefin-Weichschaumstoff wie in Anspruch 1 definiert sowie ein Herstellungsverfahren hierfür wie in Anspruch 5 definiert.

Das Pigment hat die Form von Plättchen und daher ausreichend große reflektierende Flächen.

Das Pigment hat gewöhnlich eine Teilchengröße im Bereich von 0,1 bis 100 µm, vorzugsweise 1 bis 100 µm.

Als Grundmaterial für den erfindungsgemäßen Weichschaumstoff werden Polyolefine eingesetzt, die zu einem elastischflexiblen Schaumstoff gemäß der Definition der DIN-Vorschrift 7726 führen. Geeignete Polyolefine sind Homopolymere von Ethylen, wie Polyethylen niederer Dichte, Polyethylen mittlerer Dichte und Polyethylen hoher Dichte, Copolymere von Ethylen mit anderen Olefinen mit 3 bis 8 Kohlenstoffatomen, Ethylen-Vinylacetat-Copolymere, Ethylen-Butadien-Copolymere, Ethylen-Vinylchlorid-Copolymere, Ethylen-Acrylat-Copolymere und Ethylen-Methacrylat-Copolymere. Die Polyolefine haben vorzugsweise ein mittleres Molekulargewicht von 10.000 bis 100.000.
Das Aluminium pigment wird in einer Menge von 2 bis 5 Gew.-%, bezogen auf das gesamte dem Schäumungsvorgang zu unterwerfende Gemisch, zugesetzt.

Als Schäumungsmittel wird ein übliches organisches Schäumungsmittel verwendet, welches beim Erhitzen durch Zersetzung Gase freisetzt. Beispiele für solche Schäumungsmittel sind N,N'-Dinitrosopentamethylentetramin, Azodicarbonamid und andere. Das Schäumungsmittel ist für die Zwecke der vorliegenden Erfindung nicht kritisch und es eignen sich alle derartigen Schäumungsmittel, die zur Bildung geschlossener Poren führen. Die zugesetzte Menge des Schäumungsmittels hängt von dem gewünschten Schäumungsgrad ab und beträgt beispielsweise dann, wenn ein Schäumungsverhältnis von 30 erreicht werden soll, etwa 15 Gew.-Teile organisches Schäumungsmittel pro 100 Gew.-Teile Polyolefinharz.

Zur Herstellung des erfindungsgemäßen Polyolefin-Weichschaumstoffes wird ein oder werden mehrere Polyolefin-Harze gemäß der vorstehenden Definition mit 2 bis 5 Gew.-%, bezogen auf das gesamte dem Schäumungsvorgang zu unterwerfende Gemisch, des Aluminiumpigments, einem oder mehreren Schäumungsmitteln und gegebenenfalls weiteren Additiven, wie Pigmenten, Porenbildnern, Antioxidationsmitteln, Vernetzungshilfsmitteln und Flammschutzmitteln vermischt. Das Gemisch wird entweder trocken vorgemischt und dann in einen Extruder eingegeben oder direkt im Extruder schmelzgemischt und extrudiert. Die Temperatur wird dabei so kontrolliert, daß das oder die Polymere(n) schmelzen, aber das Schäumungsmittel nicht zersetzt wird. Durch Extrusion wird eine Polyolefinmatrixbahn erhalten, in der alle Komponenten fein verteilt und homogen vermischt sind.

Das Polyolefinharz wird vor dem Verschäumen vernetzt, und zwar durch physikalische Vernetzung mit Hilfe ionisierender Strahlung, wie mit β-Strahlung, γ-Strahlung, Neutronen- oder Elektronenstrahlung. Mit Hilfe der physikalischen Vernetzung läßt sich eine kontrollierte Vernetzung erreichen.

Zur Vernetzung wird vorzugsweise die extrudierte Matrixbahn, nachdem sie über Kalanderwalzen gekühlt worden ist, durch Elektronenstrahlung vernetzt. Die Oberflächendosis liegt vorzugsweise im Bereich von 0,5 bis 20 Mrad, insbesondere 0,5 bis 5 Mrad, wobei über die Bahn hinweg eine gleichmäßige Dosis angewendet wird um bei der späteren Verschäumung eine gleichmäßige Zellstruktur zu erzielen.

Im nächsten Verfahrensschritt wird die vernetzte Matrixbahn unter Bildung einer weich-elastischen Polyolefin-Schaumstoffbahn aufgeschäumt.

Zur Herstellung der erfindungsgemäßen Polyolefin-Weichschaumstoffbahn wird die Anwendung eines Verfahrens bevorzugt, das in der DE-AS 1947589 beschrieben ist.
Dabei wird die durch Vermischen aller Komponenten und Extrusion oder Vermischen aller Komponenten und Kalandrieren gebildete Bahn vernetzt, die vernetzte Bahn, während sie sich in vertikaler oder horizontaler Lage befindet, zunächst vorgewärmt und in einer Schäumungskammer, ebenfalls in vertikaler oder horizontaler Lage, verschäumt.
Diese Schäumungskammer ist vorzugsweise ein vertikaler Ofen in welchem die vorgewärmte vernetzte Matrixbahn von oben her eintritt. In dem Ofen wird sie mit Heißluft und/oder Infrarotstrahlung erhitzt, was eine gleichmäßige Kontrolle des Schäumungsvorgangs ermöglicht, so daß ein Schaum mit glatter Oberfläche und gleichförmiger Zellstruktur gebildet wird. Die verschäumte Bahn tritt am unteren Ende des Ofens aus und wird dann verstreckt, um eine Orientierung der reflektierenden Pigmente zu erhalten und anschließend auf Kalanderwalzen gekühlt.

Eine mit Hilfe dieses Verfahrens hergestellte erfindungsgemäße Polyolefin-Weichschaumstoffbahn besitzt Wärmedämmungseigenschaften, die mit Hilfe des Zusatzes eines reflektierenden Pigments allein nicht erreicht werden können.

Der erfindungsgemäße Polyolefin-Weichschaumstoff ist äußerst feinzellig und hat gleichmäßige feine Zellen, die durch das Verstrecken oval sind. Die durchschnittliche Zellgröße beträgt in Richtung der größeren Achse 0,30 bis 0,60 mm und in Richtung der kleineren Achse 0,20 bis 0,40 mm.

Die so hergestellte Schaumstoffbahn kann dann entweder mechanisch zerteilt werden, oder weiter einer thermischen Verformung unterzogen werden, um Formkörper jeder gewünschten Gestalt herzustellen.

Die Erfindung wird durch die nachstehenden Beispiele ausführlicher erläutert.

### Beipiel 1

Ein Gemisch aus 44 Gew.-% Polyethylen niederer Dichte (d = 9.2, MF = 1.4), 7,5 Gew.-% Aluminium-Pulver in Form einer Dispersion von 40 Gew.-Teilen Aluminium-Pulver einer Teilchengröße von 10 µm in 60 Gew.-Teilen Polyethylen niederer Dichte, 13,5 Gew.-% eines Flammschutzmittels in Form eines Vorgemisches aus 50 Gew.-Teilen einer organischen Bromverbindung und 25 Gew.-Teilen Antimontrioxid, dispergiert in 25 Gew.-Teilen Polyethylen niederer Dichte, 25 Gew.-% eines Schäumungsmittels, bestehend aus 50 Gew.-Teilen Azodicarbonamid, dispergiert in 50 Gew.-Teilen Polyethylen, 3 Gew.-% eines Gemisches von Zinkoxid (Aktivator für das Schäumungsmittel) in Polyethylen und einem phenolischen Antioxidationsmittel (Irganox 1010) wurde mittels eines im Gleichsinn rotierenden Doppelschneckenextruders extrudiert. Die erhaltene Bahn (Dicke 1,25 mm) wurde mit Elektronenstrahlung bestrahlt, so daß die absorbierte Dosis 1,8 Mrad betrug. Die Bahn wurde in dem vorher beschriebenen vertikalen Schäumungsofen bis zu einer Dichte von etwa 28 kg/m³ und einer Dicke von 3 mm bei einer Temperatur von 230 °C verschäumt.

Der gebildete Schaumstoff hatte eine Wärmeleitfähigkeit von 0,034 W/mK (gemäß DIN 52612) und erfüllte den Brandtest gemäß DIN 4102 B-2.

### Beispiel 2

69 Gew.-% Polyethylen niederer Dichte mit einer Teilchengröße von weniger als 1 mm, 14 Gew.-% Azodicarbonamid, 1,5 Gew.-% eines Stearat-Verarbeitungshilfsmittels, 11,5 Gew.-% Flammschutzmittel organische Bromverbindung und Antimontrioxid im Mischungsverhältnis 2:1) und 3 % Aluminium-Pulver wurden etwa 30 min lang in einem Mischer vermischt. Nach gründlichem Vermischen wurde das Material in einem Einschneckenextruder eingegeben und bei 140°C zu einer etwa 2 mm dicken, flachen Bahn extrudiert. Die Bahn wurde durch Elektronenstrahlung mit einer absorbierten Dosis von 2 Mrad bestrahlt. Die bestrahlte Bahn wurde in dem vorher beschriebenen vertikalen Schäumungsofen bis zu einer Dicke von 5 mm und einer Dichte von etwa 30 kg/m³ verschäumt. Der gebildete Schaumstoff hatte eine Wärmeleitfähigkeit von 0,035 W/mK und erfüllte den Brandtest gemäß DIN 4102 B-2.

## Patentansprüche

1. Polyolefin-Weichschaumstoff mit geschlossenen Zellen, **gekennzeichnet durch** den Gehalt von 2 bis 5 Gew.-%, bezogen auf das gesamte dem Schäumungsvorgang unterworfene Gemisch, eines plättchenförmigen Aluminiumpigments und einen Wärmeleitfähigkeitswert λ von 0,035 W/mK oder weniger bei 40°C, erhältlich **durch** ein Verfahren, bei dem ein oder mehrere Polyolefine mit dem Aluminiumpigment, einem Schäumungsmittel und gegebenenfalls üblichen Additiven vermischt und extrudiert werden oder die Komponenten direkt im Extruder in der Schmelze gemischt und extrudiert werden, die erhaltene Bahn physikalisch **durch** ionisierende Strahlung vernetzt wird, und während die Bahn in vertikaler oder horizontaler Lage gehalten wird, diese auf eine unterhalb der Zersetzungstemperatur des Schäumungsmittels liegende Temperatur vorgewärmt und anschließend rasch auf die Schäumungstemperatur erhitzt und die geschäumte Bahn rasch verstreckt und abgekühlt wird.

2. Polyolefin-Weichschaumstoff nach Anspruch 1, **dadurch gekennzeichnet, dass** er aus einem oder mehreren Polyolefinen gebildet ist, wobei das Polyolefin ein Homopolymeres oder ein Copolymeres von Ethylen mit einem anderen Olefin mit 3 bis 8 Kohlenstoffatomen, ein Ethylen-Vinylalkohol-Copolymeres oder ein Ethylen-(Meth)acrylat-Copolymeres oder ein Gemisch davon ist.

3. Polyolefin-Weichschaumstoff nach Anspruch 1 oder 2, **dadurch gekennzeichnet, dass** er gleichmäßige feine Zellen mit einem Zelldurchmesser längs der größeren Achse von 0,30 bis 0,60 mm und längs der kleineren Achse von 0,20 bis 0,40 mm enthält.

4. Polyolefin-Weichschaumstoff nach einem der Ansprüche 1 bis 3 in Form einer Bahn, Platte, Rohrisolierung oder eines Formkörpers.

5. Verfahren zur Herstellung eines Polyolefin-Weichschaumstoff nach einem der Ansprüche 1 bis 4, **dadurch gekennzeichnet, dass** ein oder mehrere Polyolefine mit 2 bis 5 Gew.-%, bezogen auf das gesamte dem Schäumungsvorgang zu unterwerfende Gemisch, eines plättchenförmigen Aluminiumpigments, einem Schäumungsmittel und gegebenenfalls üblichen Additiven vermischt und extrudiert werden oder die Komponenten direkt im Extruder in der Schmelze gemischt und extrudiert werden,
die erhaltene Bahn physikalisch durch ionisierende Strahlung vernetzt wird und,
während die Bahn in vertikaler oder horizontaler Lage gehalten wird, diese auf eine unterhalb der Zersetzungstemperatur des Schäumungsmittels liegende Temperatur vorgewärmt und anschließend rasch auf die Schäumungstemperatur erhitzt und die geschäumte Bahn rasch verstreckt und abgekühlt wird.

## Claims

1. Polyolefin soft foam having closed cells, **characterized by** containing 2 to 5 wt.-%, based on the total mixture to be subjected to the foaming process, of an aluminum pigment having the form of plates and having a coefficient of thermal conductivity λ of 0.035 W/mK or less at 40°C,
obtainable by a process in which one or more polyolefins are mixed with said aluminum pigment, a foaming agent and optionally common additives and extruded, or the components are directly mixed and extruded in the extruder in molten state,
the obtained sheet or web is physically crosslinked by means of ionising radiation, and,
while the sheet is kept in a vertical or horizontal position, said sheet is preheated to a temperature below the decomposition temperature of the foaming agent and is then rapidly heated to the foaming temperature, and the foamed sheet is rapidly stretched and cooled.

2. Polyolefin soft foam according to claim 1, **characterized in that** it is formed from one or more polyolefins, wherein the polyolefin is a homopolymer or a copolymer of ethylene with another olefin having 3 to 8 carbon atoms, an ethylene vinylalcohol copolymer or an ethylene (meth)acrylate copolymer or a mixture thereof.

3. Polyolefin soft foam according to claim 1 or 2, **characterised in that** it comprises uniform fine cells having a cell diameter of 0.30 to 0.60 mm in the direction of the longer axis and of 0.20 to 0.40 mm in the direction of the shorter axis.

4. Polyolefin soft foam according to any of the claims 1 to 3 which is in the shape of a sheet, plate, pipe insulation or a shaped body.

5. A process for producing a polyolefin soft foam according to any of the claims 1 to 4, **characterised in that** one or more polyolefins are blended with 2 to 5 wt.-%, based on the total mixture to be subjected to the foaming process, of an aluminum pigment, a foaming agent and optionally conventional additives and extruded, or the components are directly melt mixed in the extruder and extruded, the obtained sheet is physically crosslinked by means of ionising radiation, and, while the sheet is kept vertically or horizontally, said sheet is preheated to a temperature below the decomposition temperature of the foaming agent and is thereafter rapidly heated to the foaming temperature, whereafter the foamed sheet is optionally rapidly stretched and cooled.

## Revendications

1. Mousse souple de polyoléfine avec des alvéoles fermées, **caractérisée par** la teneur de 2 à 5 % en poids, par rapport au mélange total soumis à l'opération de moussage, d'un pigment d'aluminium sous forme de paillettes et une conductivité thermique λ de 0,035 W/mK ou inférieure, à 40°C, susceptible d'être obtenue par un procédé où on mélange et on extrude une ou plusieurs polyoléfines avec le pigment d'aluminium, un agent moussant et éventuellement des additifs classiques, ou on mélange et on extrude directement les constituants dans l'extrudeuse dans la masse en fusion, on réticule la bande obtenue par voie physique, par rayonnement ionisant, et, alors que l'on maintient la bande dans une position verticale ou horizontale, on préchauffe celle-ci à une température inférieure à la température de décomposition de l'agent moussant et on chauffe ensuite rapidement jusqu'à la température de moussage et on étire et on refroidit rapidement la bande ayant moussé.

2. Mousse souple de polyoléfine selon la revendication 1, **caractérisée en ce qu'**elle est formée à partir d'une ou de plusieurs polyoléfines, la polyoléfine étant un homopolymère ou un copolymère d'éthylène avec une autre oléfine ayant de 3 à 8 atomes de carbone, un copolymère d'éthylène-alcool vinylique ou un copolymère d'éthylène-(méth)acrylate ou un mélange de ceux-ci.

3. Mousse souple de polyoléfine selon la revendication 1 ou 2, **caractérisée en ce qu'**elle contient de fines alvéoles uniformes avec un diamètre d'alvéole le long de l'axe le plus grand de 0,30 à 0,60 mm et le long de l'axe le plus petit de 0,20 à 0,40 mm.

4. Mousse souple de polyoléfine selon une des revendications 1 à 3 sous forme d'une bande, d'une plaque, d'une isolation de tuyau ou d'un corps moulé.

5. Procédé pour la fabrication d'une mousse souple de polyoléfine selon l'une des revendications 1 à 4, **caractérisé en ce qu'**on mélange et on extrude une ou plusieurs polyoléfines avec 2 à 5 % en poids, par rapport au poids total du mélange à soumettre au moussage, d'un pigment d'aluminium en forme de paillettes, un agent moussant et éventuellement des additifs classiques ou qu'on mélange et on extrude directement les constituants dans l'extrudeuse dans la masse en fusion, on réticule la bande obtenue par voie physique, par rayonnement ionisant, et, alors que l'on maintient la bande dans une position verticale ou horizontale, on préchauffe celle-ci à une température inférieure à la température de décomposition de l'agent moussant et on chauffe ensuite rapidement jusqu'à la température de moussage et on étire et on refroidit rapidement la bande ayant moussé.
